# EUROPÄISCHE PATENTSCHRIFT

(11) **EP 3 916 167 B1**
(45) Veröffentlichungstag und Bekanntmachung des Hinweises auf die Patenterteilung: **11.03.2026**
(21) Anmeldenummer: 21176311.5
(22) Anmeldetag: 27.05.2021
(51) Int. Cl.: E03F 3/06, E02F 5/10, F16L 1/06

(54) **VERFAHREN ZUR ERDVERLEGUNG VON KANALSYSTEMBAUTEILEN**
METHOD FOR LAYING CHANNEL SYSTEM COMPONENTS IN THE GROUND
PROCÉDÉ DE MISE EN SOUTERRAIN DES COMPOSANTS DE SYSTÈME DE CANAUX

(30) Priorität: 28.05.2020 DE 102020114326
(43) Veröffentlichungstag der Anmeldung: 01.12.2021
(73) Patentinhaber: Berding Beton GmbH, 49439 Steinfeld (DE)
(72) Erfinder: Berding, Georg, 49078 Osnabrück (DE)
(74) Vertreter: Manasse, Uwe

(56) Entgegenhaltungen:
- DE-A1- 102004 013 945
- DE-A1- 102007 054 169
- DE-U1- 202015 104 314
- JP-A- H04 157 272
- US-A- 3 810 364
- US-A- 5 730 552

## Beschreibung

Die vorliegende Erfindung betrifft ein Verfahren zur Erdverlegung von Kanalsystembauteilen, insbesondere Rohren, Schächten oder Bauwerken, insbesondere Schachtbauwerken, aus Beton, Stahlbeton, Faserbeton, Textilbeton, Beton mit alternativen Bindemitteln, z.B. alkalisch aktivierten Bindemitteln oder Polymeren, aus keramischen Baustoffen, z. B. Steinzeug, oder aus einem Polymer.

Beispielsweise Rohre, insbesondere Wasser- und Abwasserrohre, werden regelmäßig in Rohrgräben verlegt. Zur Verhinderung eines Auftriebs beispielsweise bei Verwendung von Flüssigboden von erdverlegten Rohren wird bei dem Rohr beispielsweise so vorgegangen, dass ein Graben (Rohrgraben) ausgehoben und ein Rohr in dem ausgehobenen Graben abgelegt sowie mittels Big-Bags (Transportsäcke) von oben beschwert wird. Danach wird Flüssigboden bis zur Oberkante des Rohres in den Graben gefüllt. Nach ca. einem Tag hat sich der Flüssigboden verfestigt und dann können die Big-Bags entfernt werden. In einem zweiten Schritt wird der Flüssigboden bis zur Unterkante Straßenaufbau eingebracht. Dieses Procedere beansprucht ebenfalls einen Tag. Dies ist recht zeitaufwendig und damit kostenintensiv. Die Dokumente DE202015104314 U1, DE102007054169 A1 und JP H04157272 A offenbaren Verfahren zur Erdverlegung von Kanalsystembauteilen.

Der vorliegenden Erfindung liegt somit die Aufgabe zugrunde, ein kostengünstigeres Verfahren zur Erdverlegung (zum Einbau) von Kanalsystembauteilen, insbesondere Rohren, Schächten oder Bauwerken, insbesondere Schachtbauwerken, aus Beton, Stahlbeton, Faserbeton, Textilbeton, Beton mit alternativen Bindemitteln, z.B. alkalisch aktivierten Bindemitteln oder Polymeren, aus keramischen Baustoffen, z. B. Steinzeug, oder aus einem Polymer, bei Verwendung von Flüssigboden bereitzustellen.

Erfindungsgemäß wird diese Aufgabe gelöst durch ein Verfahren zur Erdverlegung von Kanalsystembauteilen gemäß dem Anspruch 1. Alternativ wird diese Aufgabe gelöst durch Verfahren gemäß den Ansprüchen 2, 7 und 8.

Gemäß einer besonderen Ausführungsform der vorliegenden Erfindung wird zum Fixieren des mindestens einen Kanalsystembauteils an mindestens einer Stelle des Kanalsystembauteils quer zur Längserstreckung des mindestens eines Kanalsystembauteils auf gegenüberliegenden Seiten jeweils mindestens ein Erdanker mit Ankergurtband im Erdboden installiert, werden die Ankergurtbänder oberhalb des mindestens einen Kanalsystembauteils miteinander verbunden und mittels einer Spanneinrichtung zum Niederzurren des mindestens einen Kanalsystembauteils gespannt.

Alternativ kann vorgesehen sein, dass zum Fixieren des mindestens einen Kanalsystembauteils an mindestens einer Stelle des mindestens einen Kanalsystembauteils quer zur Längserstreckung des mindestens einen Kanalsystembauteils auf gegenüberliegenden Seiten jeweils mindestens ein Erdanker mit Ankergurtband im Erdboden installiert wird, ein Ballastierelement mit mindestens einer mindestens einer Ausnehmung an dessen Unterseite, die derart ausgebildet ist, dass das Ballastierelement auf das mindestens eine Kanalsystembauteil aufsetzbar ist, auf das mindestens eine Kanalsystembauteil gesetzt wird, die Ankergurtbänder oberhalb des Ballastierelements miteinander verbunden und mittels einer Spanneinrichtung zum Niederzurren des Ballastierelements gespannt werden.

Erfindungsgemäß wird zum Fixieren des mindestens einen Kanalsystembauteils an mindestens einer Stelle des mindestens einen Kanalsystembauteils ein Ballastierelement mit mindestens einer Ausnehmung an dessen Unterseite, die derart ausgebildet ist, dass das Ballastierelement auf das mindestens eine Kanalsystembauteil aufsetzbar ist, auf das mindestens eine Kanalsystembauteil gesetzt, wird quer zur Längserstreckung des mindestens einen Kanalsystembauteils auf gegenüberliegenden Seiten jeweils mindestens ein Erdanker mit Ankergurtband im Erdboden installiert, werden die Ankergurtbänder oberhalb des Ballastierelements miteinander verbunden und mittels einer Spanneinrichtung zum Niederzurren des Ballastierelements gespannt.

Vorteilhafterweise weist die mindestens eine Ausnehmung an der Unterseite im oberen Bereich einen Abschnitt auf, der im Wesentlichen teilkreisförmig ist, vorzugsweise an dem sich vertikal oder schräg nach außen verlaufende Flächen anschließen.

Zweckmäßigerweise weist das mindestens eine Ballastierelement mindestens eine weitere Ausnehmung an seiner Oberseite auf, die derart ausgebildet ist, dass darin ein Rohr aufnehmbar beziehungsweise anordbar ist.

Insbesondere kann dabei vorgesehen sein, dass die mindestens eine weitere Ausnehmung an der Oberseite des mindestens einen Ballastierelements im unteren Bereich einen Abschnitt aufweist, der im Wesentlichen teilkreisförmig ist, vorzugsweise an dem sich vertikal oder schräg nach außen laufende Flächen anschließen.

Außerdem kann vorgesehen sein, dass das Kanalsystembauteil ein Rohr, ein Schacht oder ein Bauwerk, insbesondere ein Schachtbauwerk, aus Beton, Stahlbeton, Faserbeton, Textilbeton, Beton mit alternativen Bindemitteln, z.B. alkalisch aktivierten Bindemitteln oder Polymeren, aus keramischen Baustoffen, z. B. Steinzeug, oder aus einem Polymer ist.

Gemäß einer weiteren besonderen Ausführungsform der vorliegenden Erfindung wird zum Fixieren des mindestens einen Kanalsystembauteils an mindestens einer Stelle des mindestens einen Kanalsystembauteils auf gegenüberliegenden Seiten jeweils ein Erdanker mit Ankergurtband im Erdboden installiert und wird jedes der Ankergurtbänder an dem mindestens einen Kanalsystembauteil zum Direktzurren des Kanalsystembauteils befestigt.

Erfindungsgemäß wird zum Fixieren des mindestens einen Kanalsystembauteils an mindestens einer Stelle des mindestens einen Kanalsystembauteils auf gegenüberliegenden Seiten jeweils einen Erdanker mit Ankergurtband im Erdboden installiert, ein Ballastierelement mit mindestens einer Ausnehmung an dessen Unterseite, die derart ausgebildet ist, dass des Ballastierelement auf das mindestens eine Kanalsystembauteil aufsetzbar ist, auf das mindestens eine Kanalsystembauteil gesetzt und wird jedes der Ankergurtbänder an dem Ballastierelement zum Direktzurren des mindestens Kanalsystembauteils befestigt.

Erfindungsgemäß ist vorgesehen, dass zum Fixieren des mindestens einen Kanalsystembauteils an mindestens einer Stelle des mindestens einen Kanalsystembauteils ein Ballastierelement mit mindestens einer Ausnehmung an dessen Unterseite, die derart ausgebildet ist, dass des Ballastierelement auf das mindestens eine Kanalsystembauteil aufsetzbar ist, auf das mindestens eine Kanalsystembauteil gesetzt wird, auf gegenüberliegenden Seiten jeweils ein Erdanker mit Ankergurtband im Erdboden installiert wird und jedes der Ankergurtbänder an dem Ballastierelement zum Direktzurren des mindestens Kanalsystembauteils befestigt wird.

Zweckmäßigerweise weist die mindestens eine Ausnehmung an der Unterseite im oberen Bereich einen Abschnitt auf, der im Wesentlichen teilkreisförmig ist, vorzugsweise an dem sich vertikal oder schräg nach außen verlaufende Flächen anschließen.

Günstigerweise weist das mindestens eine Ballastierelement mindestens eine weitere Ausnehmung an seiner Oberseite aufweist, die derart ausgebildet ist, dass darin ein Rohr aufnehmbar beziehungsweise anordbar ist.

Insbesondere kann dabei vorgesehen sein, dass die mindestens eine weitere Ausnehmung an der Oberseite des mindestens einen Ballastierelements im unteren Bereich einen Abschnitt aufweist, der im Wesentlichen teilkreisförmig ist, vorzugsweise an dem sich vertikal oder schräg nach außen laufende Flächen anschließen.

Insbesondere kann dabei vorgesehen sein, dass das Kanalsystembauteil ein Bauwerk, insbesondere Schachtbauwerk, insbesondere aus Beton, Stahlbeton, Faserbeton, Textilbeton, Beton mit alternativen Bindemitteln, z. B. alkalisch aktivierten Bindemitteln oder Polymeren, aus keramischen Baustoffen, z. B. Steinzeug, oder aus einem Polymer ist.

Gemäß einer weiteren besonderen Ausführungsform der vorliegenden Erfindung besteht das Ballastierelement aus Beton, Stahlbeton, Faserbeton, Textilbeton, Beton mit alternativen Bindemitteln, z.B. alkalisch aktivierten Bindemitteln oderPolymeren, aus Holz, metallischen Werkstoffen oder aus einem Polymer oder umfasst diese.

Vorteilhafterweise umfasst das Verfahren seitliches Abschotten eines das Kanalsystembauteil enthaltenden Abschnitts des Grabens vor dem Einfüllen von Flüssigboden.

Insbesondere kann dabei vorgesehen werden, dass zum Abschotten ein Abschottelement mit mindestens einer Ausnehmung an dessen Unterseite, die derart ausgebildet ist, dass das Abschottelement auf das mindestens eine Kanalsystembauteil, vorzugsweise formschüssig, aufsetzbar ist, auf das mindestens eine Kanalsystembauteil gesetzt wird, vorzugsweise wobei das Abschottelement mittels mindestens zweier Erdanker mit Ankergurtband in dem Graben fixiert wird.

Günstigerweise ist das Abschottelement mindestens zweiteilig gestaltet und werden die Teile des Abschottelements gleichzeitig oder nacheinander auf das mindestens eine Kanalsystembauteil gesetzt.

Insbesondere kann dabei vorgesehen sein, dass das Abschottelement aus Beton, Stahlbeton, Faserbeton, Textilbeton, Beton mit alternativen Bindemitteln, z.B. alkalisch aktivierten Bindemitteln und Polymeren aus Holz oder metallischen Werkstoffen besteht oder diese umfasst.

Vorteilhafterweise wird der Flüssigboden unter Verwendung von zumindest einem Teil des beim Ausheben des Grabens anfallenden Aushubmaterials vor Ort oder in einer baustellennahen Aufbereitungsanlage hergestellt.

Gemäß einer weiteren besonderen Ausführungsform der vorliegenden Erfindung weist der Graben mindestens eine senkrechte Seitenwand auf.

Schließlich kann vorgesehen sein, dass der Graben mindestens eine schräge Seitenwand aufweist. Beispielsweise kann es sich um eine Böschung handeln.

Der vorliegenden Erfindung liegt die überraschende Erkenntnis zugrunde, dass durch die Fixierung des Kanalsystembauteils mittels Erdanker der Flüssigboden in einem Arbeitsschritt bis zur Oberkante des Grabens eingebracht werden und dadurch Zeit eingespart werden kann. Dies ist wiederum mit einer Kostenersparnis verbunden.

Die Zeitersparnis führt auch zu einer höheren Verlegeleistung.

Durch die Verwendung von Erdankern und insbesondere durch die Verwendung in Kombination mit Ballastierelementen gemäß besonderen Ausführungsformen lässt sich immer eine gleiche Positionierung beispielsweise von Rohren in Rohrgräben erreichen und eine Auftriebssicherung erzielen. Insbesondere lässt sich gemäß besonderen Ausführungsformen eine sichere Positionierung von unterschiedlichen Rohren (werkstoffneutral), zum Beispiel Wasser- Abwasser- und Medienrohren, erzielen.

Zumindest in besonderen Ausführungsformen lassen sich mehrere beispielsweise Rohre an einem Tag in einem Rohrgraben verlegen, während im Stand der Technik dazu zwei Arbeitsschritte und dann mindestens zwei Tage erforderlich sind. Zudem ist dazu ein stufenloser Rohrgraben erforderlich, was wiederum mit einem geringeren Zeitaufwand und damit geringeren Kosten und schneller möglich ist.

Zumindest in besonderen Ausführungsformen sind flexible Bauabschnitte durch Ballastierelemente und Abschottelemente möglich.

Kurze Bauzeiten führen auch zu einer Entlastung der Anwohner sowie zu einer Verkehrsstaureduzierung.

Zudem lässt sich damit ein optimaler Einbau durch Vermeidung von Fehlern bei der Verdichtung realisieren. Dies führt wiederum zu einer längeren Lebensdauer beispielsweise von verlegten Rohren.

Wenn das Aushubmaterial für die Herstellung des Flüssigbodens verwendet wird, so ist dies klimafreundlich, da das Aushubmaterial nicht entsorgt werden muss.

Weitere Merkmale und Vorteile der Erfindung ergeben sich aus den beigefügten Ansprüchen und aus der nachfolgenden Beschreibung, in der mehrere Ausführungsbeispiele anhand der schematischen Zeichnungen im Einzelnen erläutert sind. Dabei zeigt/zeigen:
- Figur 1: eine Schnittansicht quer zur Längserstreckung eines Grabens während des Einbaus eines Rohres gemäß einer ersten besonderen Ausführungsform der vorliegenden Erfindung;
- Figuren 2 bis 4: Phasen der Installation eines Erdankers gemäß einer besonderen Ausführungsform der vorliegenden Erfindung;
- Figur 5: eine Detailansicht von Figur 1;
- Figur 6: eine Schnittansicht quer zur Längserstreckung eines Grabens während des Einbaus eines Rohres gemäß einer zweiten besonderen Ausführungsform der vorliegenden Erfindung;
- Figur 7: eine Schnittansicht quer zur Längserstreckung eines Grabens während des Einbaus eines Bauwerks gemäß einer weiteren besonderen Ausführungsform der vorliegenden Erfindung;
- Figur 8: eine Schnittansicht quer zur Längserstreckung eines Grabens während des Einbaus eines Bauwerks gemäß einer weiteren besonderen Ausführungsform der vorliegenden Erfindung;
- Figur 9: eine Vorderansicht eines Ballastierelements gemäß einer besonderen Ausführungsform der vorliegenden Erfindung;
- Figur 10: das Ballastierelement von Figur 9 im eingebauten Zustand;
- Figur 11: eine Vorderansicht eines Ballastierelements gemäß einer weiteren besonderen Ausführungsform der vorliegenden Erfindung, über ein Rohr gestülpt;
- Figur 12: eine Vorderansicht eines Ballastierelements gemäß einer weiteren besonderen Ausführungsform der vorliegenden Erfindung, über ein Rohr gestülpt;
- Figur 13: eine Vorderansicht eines Abschottelements gemäß einer besonderen Ausführungsform der vorliegenden Erfindung;
- Figur 14: das Abschottelement von Figur 13 im eingebauten Zustand;
- Figur 15: ein Abschottelement gemäß einer weiteren besonderen Ausführungsform der vorliegenden Erfindung im eingebauten Zustand;
- Figur 16: eine Vorderansicht eines Abschottelements gemäß einer weiteren besonderen Ausführungsform der vorliegenden Erfindung;
- Figur 17: eine Vorderansicht eines Abschottelements gemäß einer weiteren besonderen Ausführungsform der vorliegenden Erfindung, über ein Rohr gestülpt;
- Figur 18: eine Vorderansicht eines Abschottelements gemäß einer weiteren besonderen Ausführungsform der vorliegenden Erfindung, über ein Rohr gestülpt;
- Figur 19: eine Draufsicht (unten) und eine Seitenansicht (oben) von erdverlegten Rohren inklusive Schachtbauwerk gemäß einer besonderen Ausführungsform der vorliegenden Erfindung;

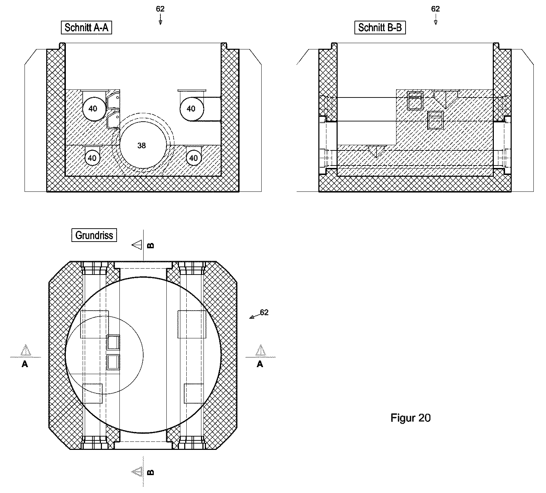

- Figur 20: einen Grundriss (unten links), eine Schnittansicht A-A (oben links) und eine Schnittansicht B-B (oben rechts) vom Schachtbauwerk von Figur 19.

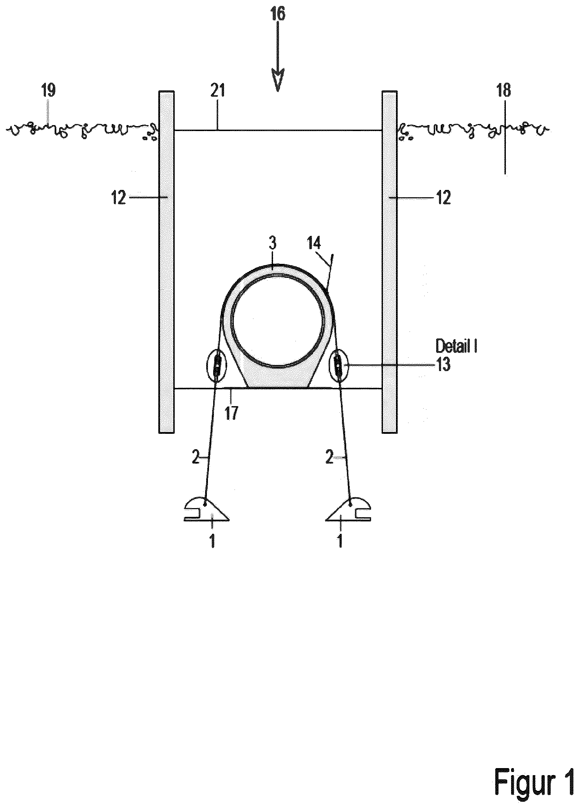

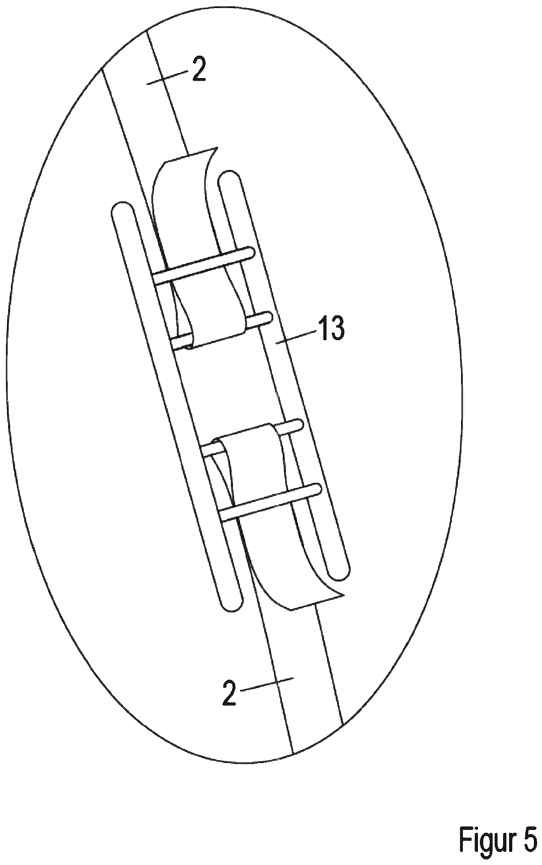

In der Figur 1 ist ein Rohr 3 mit einem Fuß, das beispielsweise aus Beton, Stahlbeton oder Stahlfaserbeton hergestellt sein kann, nach Ausheben eines Grabens 16 im Erdboden 18 bereits in dem ausgehobenen Graben auf dem in diesem Beispiel horizontalen Boden 17 desselben in Längsrichtung des Grabens 16 abgelegt. Das Rohr 3 ist auch schon mittels Erdanker 1, Ankergurtband 2 sowie einem Spannschloss 13 (siehe auch Figur 5) und einer Spanneinrichtung 14 in dem ausgehobenen Graben 16 am Boden 17 fixiert. Die Erdanker 1 sind dazu auf gegenüberliegenden Längsseiten des Rohres 3 im Erdboden 18 installiert.

Ferner ist bereits ein das Rohr 3 enthaltender Abschnitt des Grabens 16 mittels eines Verbaus 12 in Längserstreckung des Grabens 16 abgeschottet.

In einem nächsten Schritt kann dann Flüssigboden 21, der beispielsweise aus dem Aushubmaterial hergestellt und in diesem Beispiel selbstnivellierend ist, in den Graben 16 bis zur Oberkante 19 desselben gefüllt werden. Nach Verfestigen des Flüssigbodens ist das Rohr dann oben geschlossen in der Erde verlegt bzw. eingebaut.

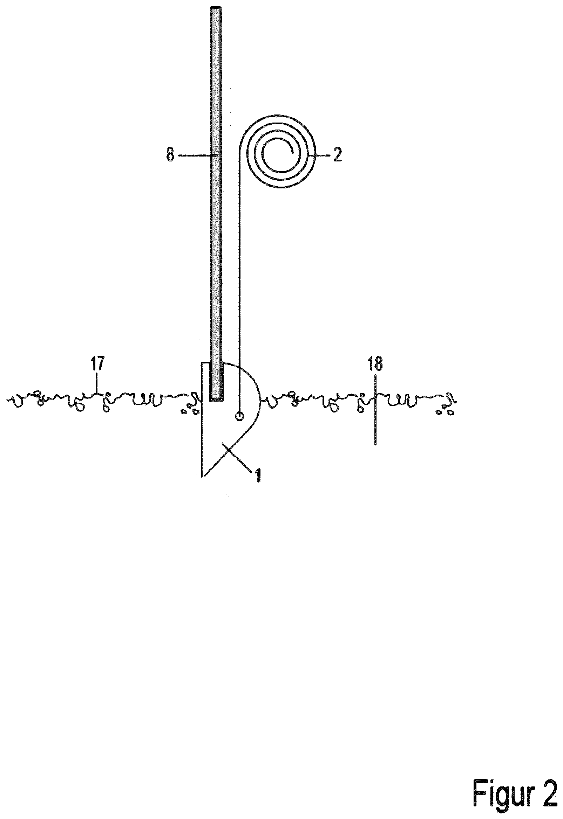

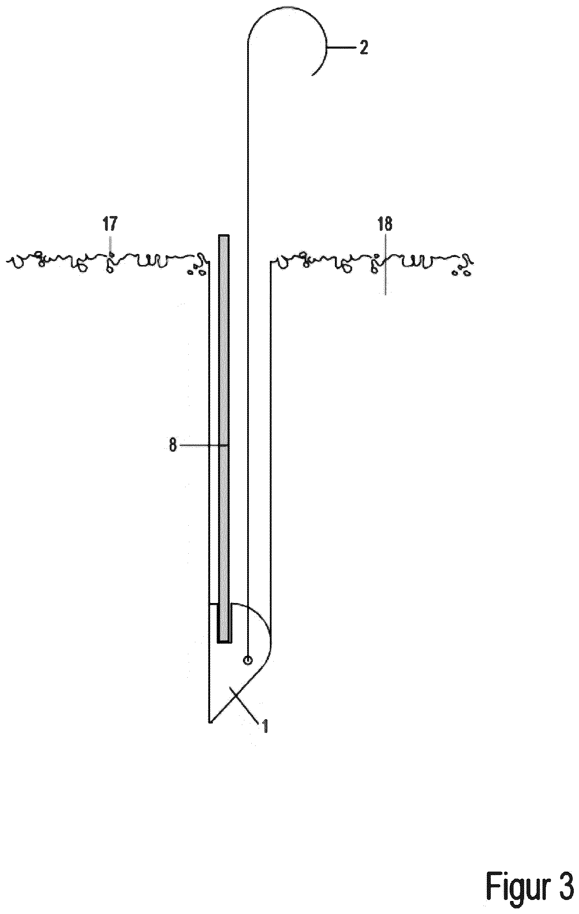

Die Figuren 2 bis 4 zeigen beispielhaft die Installation eines Erdankers 1 im Erdboden 18. Der Erdanker 1 ist mit einem Ankergurtband 2 versehen. Mittels beispielsweise eines Stahlrohres 8 wird der Erdanker 1 in den Erdboden gerammt (siehe Figur 3). Das obere Ende des Ankergurtbands 2 bleibt dabei oberhalb des Erdbodens 18.

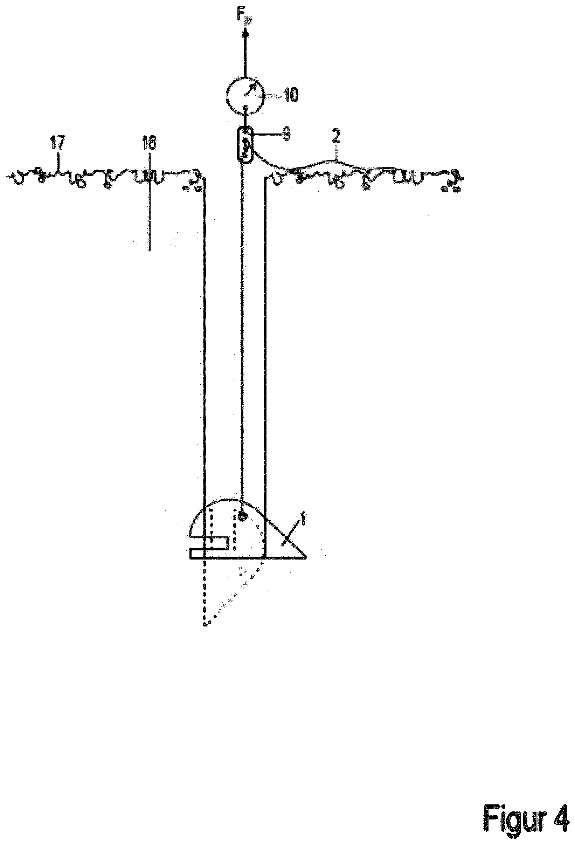

Danach kann mittels eines Anschlagmittels 9 und einer damit in Verbindung stehenden Kraftmessdose 10 eine charakteristische Zugkraft F_{Zk} ermittelt werden (s. Figur 4).

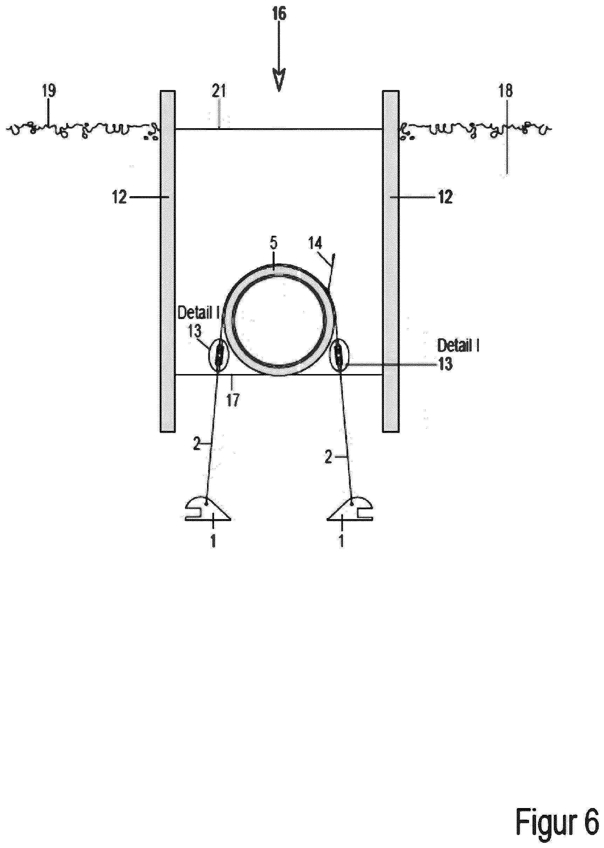

Die in der Figur 6 dargestellte Szene unterscheidet sich von der in der Figur 1 dargestellten Szene im Prinzip lediglich in der Art des verlegten Rohres 5. Es handelt sich um ein kreisrundes Rohr beispielsweise aus Beton, Stahlbeton oder Stahlfaserbeton. Das Rohr könnte aber beispielsweise auch ein Eigenprofil aufweisen.

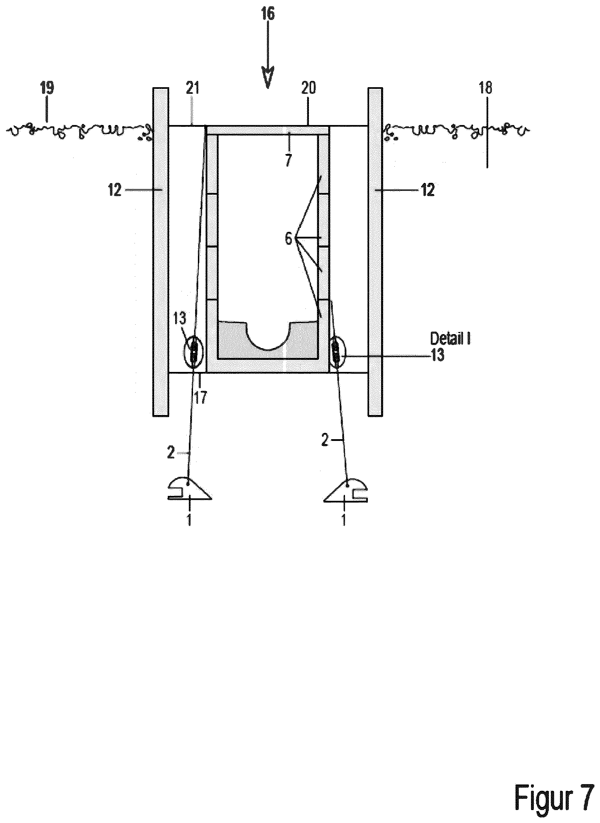

In der Figur 7 geht es nicht um die Verlegung eines Rohres, sondern eines Bauwerks 20, genauer gesagt eines Schachtbauwerks, das Schachtbauteile 6 beispielsweise aus Beton, Stahlbeton oder Stahlfaserbeton und eine Abdeckplatte 7 beispielsweise aus Beton, Stahlbeton oder Stahlfaserbeton umfasst. In dem gezeigten Beispiel wird das Bauwerk 20 auf gegenüberliegenden Seiten mittels jeweils eines im Erdboden 18 installierten Erdankers 1 mit Ankergurtband 2, das an dem Bauwerk 20 auf der einen Seite an der Abdeckplatte 7 und auf der anderen Seite an dem Schachtbauteil 6 unter Spannung befestigt ist, durch Direktzurren fixiert.

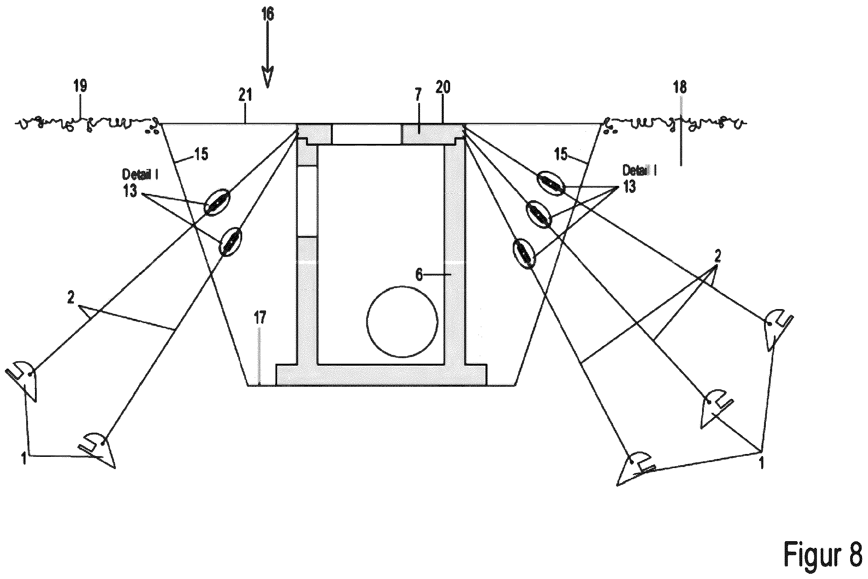

In der Figur 8 ist ebenfalls ein Bauwerk 20, genauer gesagt ein Schachtbauwerk, das Schachtbauteile 6 aus Beton, Stahlbeton, oder Stahlfaserbeton und eine Abdeckplatte 7 aus Beton, Stahlbeton oder Stahlfaserbeton umfasst, auf dem Boden 17 des Grabens 16 abgelegt. Die Seitenwände des Grabens 16 sind jedoch nicht wie in den vorangehend beschriebenen Ausführungsformen senkrecht, sondern schräg, und bilden eine jeweilige Böschung 15.

Auf jeder Seite des Bauwerks 20 sind in diesem Beispiel zwei bzw. drei Erdanker 1 mit Ankergurtband 2 vorgesehen. Die Erdanker 1 sind in den Böschungen 15 installiert. Die oberen Enden der Ankergurtbänder sind beispielsweise an der Abdeckplatte 7 unter Spannung befestigt.

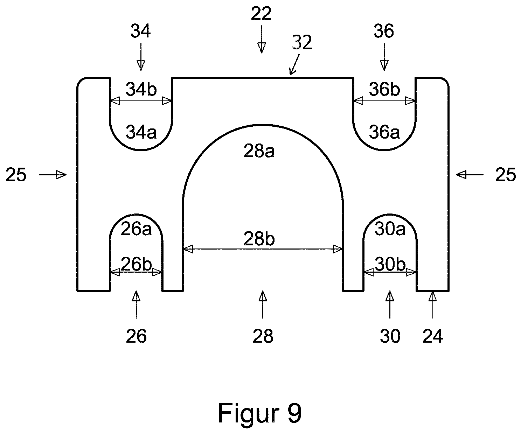

Figur 9 zeigt eine Vorderansicht eines Ballastierelements 22 gemäß einer besonderen Ausführungsform der vorliegenden Erfindung. Das Ballastierelement 22 weist eine Unterseite (Grabenaufsetzseite) 24 auf, die zum Aufsetzen beziehungsweise Auflegen auf einer Grabensohle dient. Ein System aus zum Beispiel einer Rohrleitung und einem Ballastierelement kann dadurch ein festes Gegenlager auf einer Grabensohle haben.

Im vorliegenden Beispiel weist das Ballastierelement 22 an seiner Unterseite 24 drei Ausnehmungen 26, 28 und 30 auf, wobei die linke Ausnehmung 26 und die rechte Ausnehmung 30 beispielhaft identisch gestaltet und symmetrisch zur mittigen Ausnehmung 28 angeordnet sind. Die mittige Ausnehmung 28 ist deutlich größer als die seitlichen Ausnehmungen 26 und 28 und dient zum Beispiel zur Aufnahme eines Hauptrohres.

Alle drei Ausnehmungen 26 bis 30 weisen in diesem Beispiel im oberen Bereich einen Abschnitt 26a beziehungsweise 28a beziehungsweise 30a auf, der im Wesentlichen teilkreisförmig ist, an dem sich vertikal verlaufende Flächen 26b beziehungsweise 28b beziehungsweise 30b anschließen.

In diesem Beispiel weist das Ballastierelement 22 auf seinen zu den Seitenwänden eines Grabens gewandten Seiten 25 keine Ausnehmungen auf. Auf der Oberseite 32 des Ballastierelements 22 befinden sich jedoch ähnlich symmetrisch wie die Ausnehmungen 26 und 30 zwei Ausnehmungen 34 und 36.

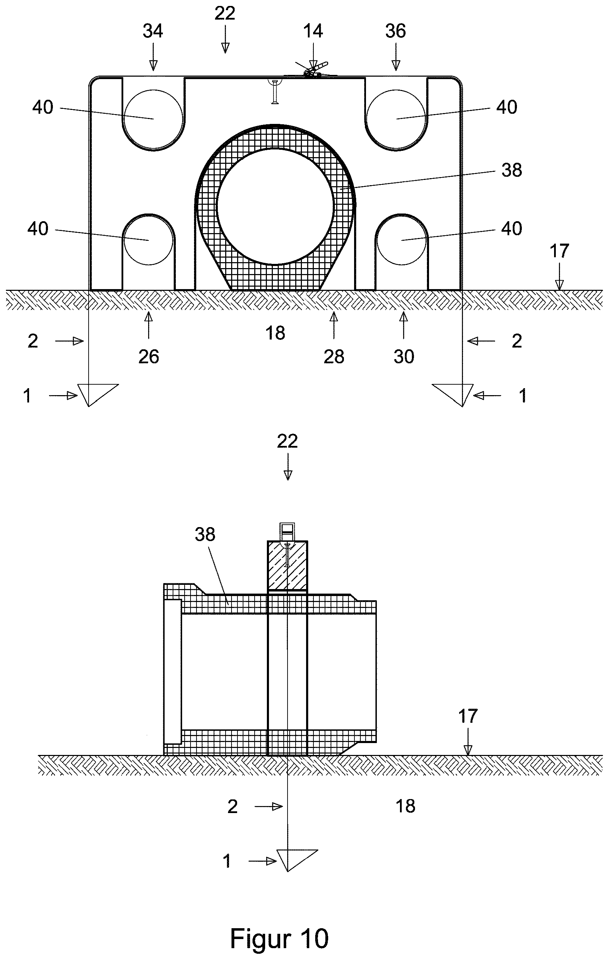

In der Figur 10 ist das Ballastierelement 22 von Figur 9 beispielhaft im eingebauten Zustand gezeigt. In den Ausnehmungen 26, 28, 30 und 34 sowie 36 befindet sich jeweils ein Rohr, und zwar in der Ausnehmung 28 ein Hauptrohr 38 und in den übrigen Ausnehmungen jeweils ein Rohr 40. Die Rohre 40 in den oberen Ausnehmungen 34 und 36 sind in diesem Beispiel nach dem Überstülpen des Ballastierelements 22 über das Hauptrohr 38 und die dazu seitlichen Rohre 40 in die oberen Ausnehmungen 34 und 36 gelegt worden. Danach ist das Ballastierelement 22 und sind damit auch das Hauptrohr 38 und die Rohre 40 mittels Erdanker 1 mit Ankergurtbändern 2 fixiert worden.

Figur 10 unten zeigt eine Längsschnittansicht. Es können zum Beispiel mehrere Ballastierelemente 22 im Abstand zueinander in Längserstreckung des Hauptrohres 38 und der dazu parallelen Rohre 40 angeordnet sein beziehungsweise werden.

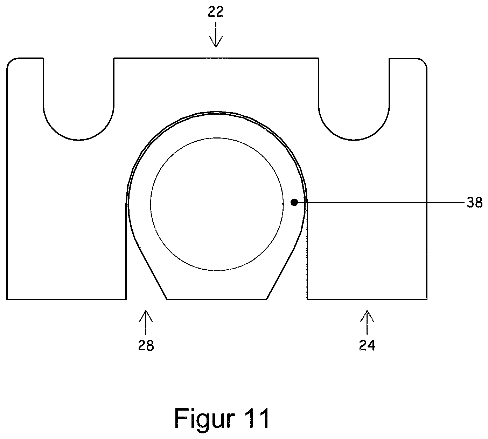

Figur 11 zeigt ein Ballastierelement 22 gemäß einer weiteren besonderen Ausführungsform der vorliegenden Erfindung in einem schon über ein Hauptrohr 38 gestülpten Zustand. Im Gegensatz zum in der Figur 9 gezeigten Ballastierelement weist es jedoch an seiner Unterseite 24 nur eine Ausnehmung, nämlich eine Ausnehmung 28 für das Hauptrohr 38 auf.

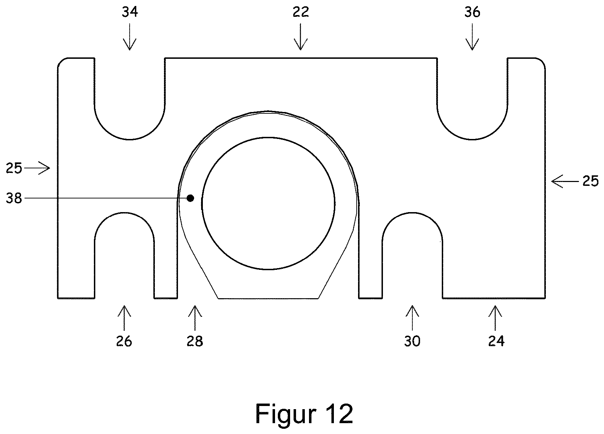

Das in der Figur 12 gezeigte Ballastierelement 22 weist zwar wie das in der Figur 9 gezeigte Ballastierelement grundsätzlich dieselbe Anzahl von Ausnehmungen auf, jedoch sind diese an der Unterseite 24 etwas anders positioniert und weist das Ballastierelement andere Proportionen auf.

Die vorangehend beschriebenen Ballastierelemente verbleiben üblicherweise beim Verlegen von Rohren im Boden.

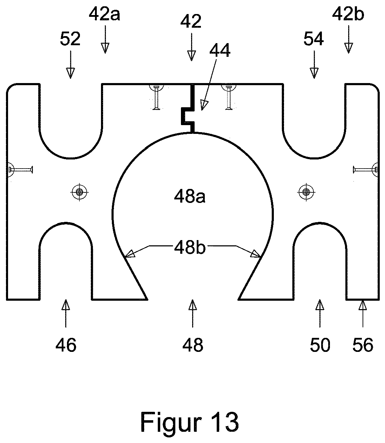

Figur 13 zeigt ein Beispiel eines Abschottelements 42 gemäß einer besonderen Ausführungsform der vorliegenden Erfindung. Im vorliegenden Beispiel ist das Abschottelelement 42 zweiteilig gestaltet. Die beiden Teile 42a und 42b sind hinsichtlich der Anordnung der Ausnehmungen 46, 48, 50, 52 und 54 spiegelbildlich gestaltet und lassen sich durch entsprechende Ausgestaltung einer Verbindungsseite 44 dort formschlüssig verbinden. Anders als bei den oben gezeigten Ballastierelementen weist die in diesem Beispiel mittige Ausnehmung 48 an der Unterseite 56 des Abschottelements 42 im oberen Bereich einen Abschnitt 48a auf, der im Wesentlichen teilkreisförmig ist, an den sich schräg nach innen laufende Flächen 48b anschließen.

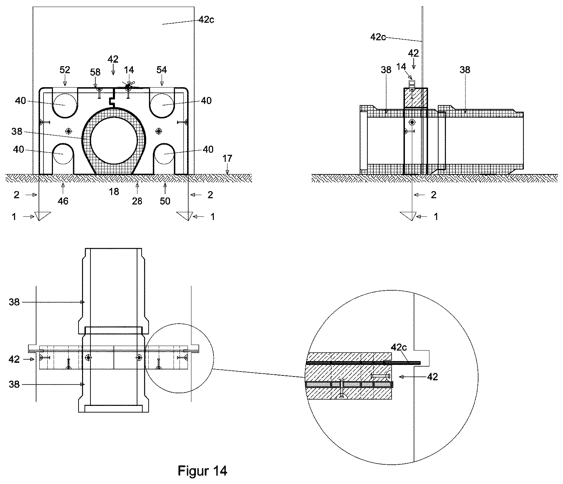

Wie sich in Kombination mit der Figur 14 ergibt, dient dies zum im Wesentlichen formschlüssigen Umgeben eines außen komplementär ausgebildeten Hauptrohres 38. Dadurch kann im Prinzip kein Flüssigboden zwischen dem Abschottelement 42 und dem Hauptrohr 38 hindurch fließen.

Figur 14 zeigt aber auch noch weitere Rohre 40 in den übrigen Ausnehmungen 46, 50, 52 und 54. Zwischenräume im Bereich der Ausnehmungen 46, 50, 52 und 54 zwischen den Rohren 40 und dem Abschottelement 42 lassen sich zum Beispiel durch häufig auf einer Baustelle vorhandenen Materialien, wie zum Beispiel Holzplatten, Holzleisten etc. auch abdichten.

Zum Abschottelement 42 gehört auch noch eine Abschottwand 42c, zum Beispiel aus Metall, die das Abschottelement 42 zu beiden Seiten und oben über das Abschottelement hinaus umgibt, insbesondere damit kein Flüssigboden im Graben oberhalb des Abschottelements 42 zur anderen Seite hinübergelangen kann.

Wie sich ferner aus der Figur 14 ergibt, ist das Abschottelement 42 in diesem Beispiel wie die vorangehend beschriebenen Ballastierelemente mittels Erdanker 1 und Ankergurtbänder 2 an einer Stelle in Längserstreckung des Hauptrohres 38 und der dazu parallel verlaufenden Rohre 40 fixiert.

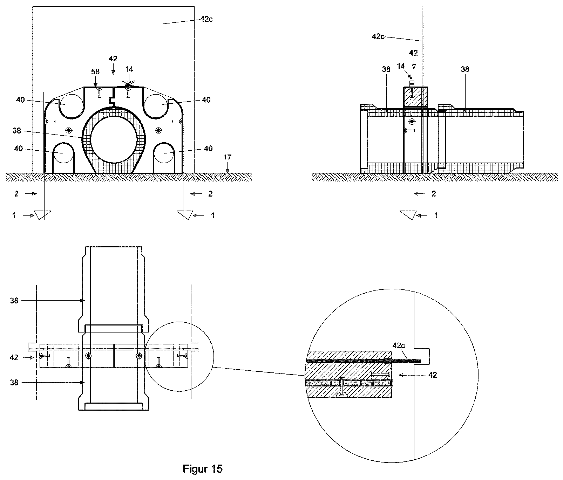

Figur 15 zeigt eine entsprechende Situation wie Figur 14, jedoch mit einem etwas modifizierten Abschottelement 42. Die Modifikation betrifft im Wesentlichen nur die Gestaltung der Oberseite 58 des Abschottelements 42.

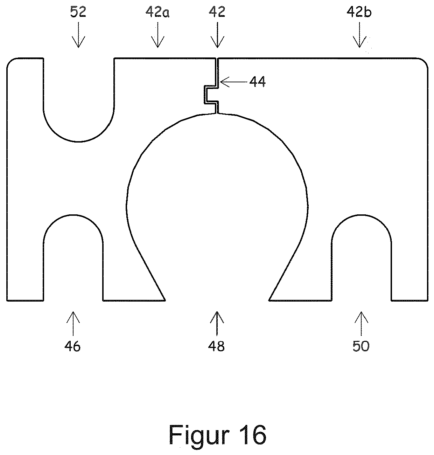

Figur 16 zeigt ein Beispiel eines Abschottelements 42 gemäß einer weiteren besonderen Ausführungsform der vorliegenden Erfindung. In diesem Beispiel weist das Abschottelement insgesamt lediglich vier Ausnehmungen 46, 48, 50 und 52 auf.

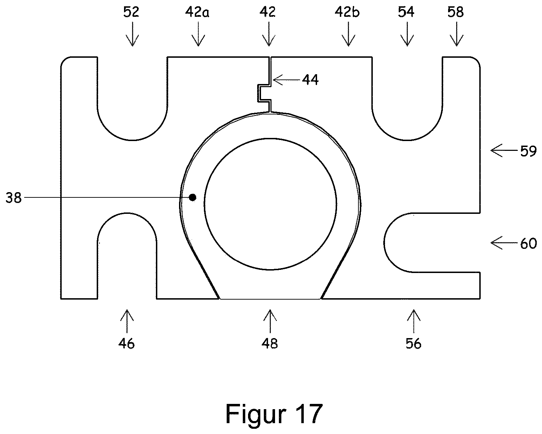

Figur 17 zeigt ein weiteres Beispiel eines Abschottelements 42, das bereits über ein Hauptrohr 38 "gestülpt" ist. In diesem Beispiel weist das Abschottelement 42 an seiner Unterseite 56 lediglich zwei Ausnehmungen 46 und 48 und an seiner Oberseite 58 zwei Ausnehmungen 52 und 54 auf. Dafür weist es auf seiner rechten Seite 59 eine Ausnehmung 60 zur seitlichen Aufnahme eines Rohres (nicht gezeigt) auf.

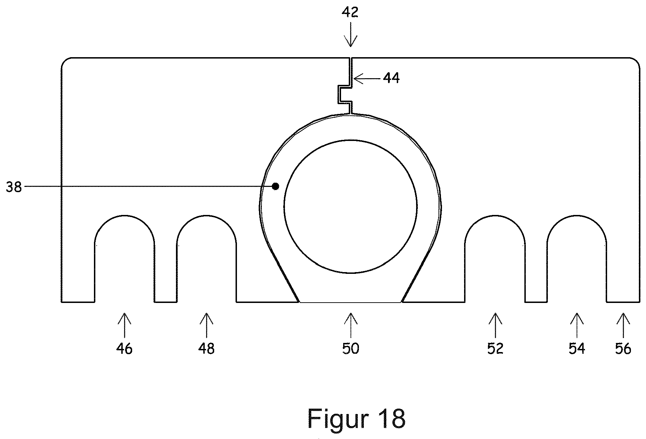

Figur 18 zeigt ein weiteres Beispiel eines Abschottelements 42. Dies weist zwar - wie beispielsweise das Abschottelement von Figur 13 - insgesamt fünf Ausnehmungen 46, 48, 50, 52 und 54 auf, diese befinden sich jedoch alle auf der Unterseite 56.

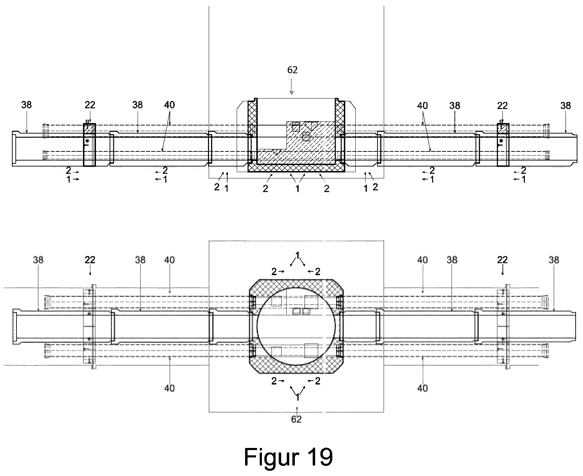

Schließlich zeigen die Figuren 19 (oben: Seitenansicht; unten: Draufsicht von oben) und 20 die Fixierung mittels Erdankern 1 und Ankergurtbändern 2 alleine, aber auch die Fixierung mittels Ballastierelemente 22 und Erdankern 1 und Ankergurtbändern 2 eines Hauptrohres 38 und von Rohren 40 sowie die Fixierung eines Schachtes 62 mittels Erdanker 1 und Ankergurtbänder 2.

Die Abschottelemente sind grundsätzlich wiederverwendbar.

Zum Fixieren von Kanalsystembauteilen können Erdanker und Ankergurtbänder alleine einerseits und Ballastierelemente in Kombination mit Erdankern und Ankergurtbändern andererseits zum Beispiel abwechselnd in Längserstreckung der jeweiligen Kanalsystembauteile verwendet werden. Die Abstände zwischen den Ballastierelementen können beispielsweise fünf Meter betragen.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

### Bezugszeichenliste

- 1: Erdanker
- 2: Ankergurtbänder
- 3: Rohr mit Fuß
- 5: Rohr
- 6: Schachtbauteile
- 7: Abdeckplatte
- 8: Stahlrohr
- 9: Anschlagmittel
- 10: Kraftmessdose
- 12: Verbau
- 13: Spannschloss
- 14: Spanneinrichtung
- 15: Böschungen
- 16: Graben
- 17: Boden
- 18: Erdboden
- 19: Oberkante
- 20: Bauwerk
- 21: Flüssigboden
- 22: Ballastierelemente
- 24: Unterseite
- 25: Seiten
- 26, 28, 30: Ausnehmungen
- 26a, 28a, 3oa: Abschnitte
- 26b, 28, 30b: Flächen
- 32: Oberseite
- 34, 36: Ausnehmungen
- 34a, 36a: Abschnitte
- 34b, 36b: Flächen
- 38: Hauptrohr
- 40: Rohre
- 42: Abschottelement
- 42a, 42b: Teile
- 42c: Abschottwand
- 44: Verbindungsseiten
- 46, 48, 50, 52, 54: Ausnehmungen
- 48a: Abschnitt
- 48b: Fläche
- 56: Unterseite
- 58: Oberseite
- 59: Seite
- 60: Ausnehmung
- 62: Schacht

## Patentansprüche

1. Verfahren zur Erdverlegung von Kanalsystembauteilen, umfassend:
- Ausheben eines Grabens (16), insbesondere Rohrgrabens,
- Ablegen mindestens eines Kanalsystembauteils in dem ausgehobenen Graben (16),
- Fixieren des abgelegten mindestens einen Kanalsystembauteils in dem ausgehobenen Graben (16) mittels mindestens zweier Erdanker (1) an mindestens einer Stelle in Längserstreckung des mindestens einen Kanalsystembauteils und
- Füllen von Flüssigboden in den Graben (16) bis zur Oberkante (19) desselben,
wobei zum Fixieren des mindestens einen Kanalsystembauteils an mindestens einer Stelle des mindestens einen Kanalsystembauteils quer zur Längserstreckung des mindestens einen Kanalsystembauteils auf gegenüberliegenden Seiten jeweils mindestens ein Erdanker (1) mit Ankergurtband (2) im Erdboden (18) installiert wird, ein Ballastierelement (22) mit mindestens einer Ausnehmung (26, 28, 30) an dessen Unterseite (24), die derart ausgebildet ist, dass das Ballastierelement (22) auf das mindestens eine Kanalsystembauteil aufsetzbar ist, auf das mindestens eine Kanalsystembauteil gesetzt wird, die Ankergurtbänder (2) oberhalb des Ballastierelements (22) miteinander verbunden und mittels einer Spanneinrichtung (14) zum Niederzurren des Ballastierelements (22) gespannt werden.

2. Verfahren zur Erdverlegung von Kanalysystembauteilen, umfassend:
- Ausheben eines Grabens (16), insbesondere Rohrgrabens,
- Ablegen mindestens eines Kanalsystembauteils in dem ausgehobenen Graben (16),
- Fixieren des abgelegten mindestens einen Kanalsystembauteils in dem ausgehobenen Graben (16) mittels mindestens zweier Erdanker (1) an mindestens einer Stelle in Längserstreckung des mindestens einen Kanalsystembauteils und
- Füllen von Flüssigboden in den Graben (16) bis zur Oberkante (19) desselben,
wobei zum Fixieren des mindestens einen Kanalsystembauteils an mindestens einer Stelle des mindestens einen Kanalsystembauteils ein Ballastierelement (22) mit mindestens einer Ausnehmung (26, 28, 30) an dessen Unterseite (24), die derart ausgebildet ist, dass das Ballastierelement (22) auf das mindestens eine Kanalsystembauteil aufsetzbar ist, auf das mindestens eine Kanalsystembauteil gesetzt wird, quer zur Längserstreckung des mindestens einen Kanalsystembauteils auf gegenüberliegenden Seiten jeweils mindestens ein Erdanker (1) mit Ankergurtband (2) im Erdboden (18) installiert wird, die Ankergurtbänder (2) oberhalb des Ballastierelements (22) miteinander verbunden und mittels einer Spanneinrichtung (14) zum Niederzurren des Ballastierelements (22) gespannt werden.

3. Verfahren nach Anspruch 1 oder 2, wobei die mindestens eine Ausnehmung (26, 28, 30) an der Unterseite (24) im Oberen Bereich einen Abschnitt (26a, 28a, 30a) aufweist, der im Wesentlichen teilkreisförmig ist, vorzugsweise an den sich vertikal oder schräg nach außen laufende Flächen (26b, 28b, 30b) anschließen.

4. Verfahren nach einem der vorangehenden Ansprüche 1 bis 3, wobei das mindestens eine Ballastierelement (22) mindestens eine weitere Ausnehmung (34, 36) an seiner Oberseite (32) aufweist, die derart ausgebildet ist, dass darin ein Rohr aufnehmbar beziehungsweise anordbar ist.

5. Verfahren nach Anspruch 4, wobei die mindestens eine weitere Ausnehmung (34, 36) an der Oberseite (32) des mindestens einen Ballastierelements (22) im unteren Bereich einen Abschnitt (34a, 36a) aufweist, der im Wesentlichen teilkreisförmig ist, vorzugsweise an dem sich vertikal oder schräg nach außen laufende Flächen (34b, 36b) anschließen.

6. Verfahren nach einem der vorangehenden Ansprüche, wobei das Kanalsystembauteil ein Rohr (3; 5; 38; 40), ein Schacht (62) oder ein Bauwerk (20), insbesondere Schachtbauwerk, insbesondere aus Beton, Stahlbeton, Faserbeton, Textilbeton, Beton mit alternativen Bindemitteln, z.B. alkalisch aktivierten Bindemitteln oder Polymeren, aus keramischen Baustoffen, z. B. Steinzeug, oder aus einem Polymer ist.

7. Verfahren zur Erdverlegung von Kanalsystembauteilen, umfassend:
- Ausheben eines Grabens (16), insbesondere Rohrgrabens,
- Ablegen mindestens eines Kanalsystembauteils in dem ausgehobenen Graben (16),
- Fixieren des abgelegten mindestens einen Kanalsystembauteils in dem ausgehobenen Graben (16) mittels mindestens zweier Erdanker (1) an mindestens einer Stelle in Längserstreckung des mindestens einen Kanalsystembauteils und
- Füllen von Flüssigboden in den Graben (16) bis zur Oberkante (19) desselben, wobei zum Fixieren des mindestens einen Kanalsystembauteils an mindestens einer Stelle des mindestens einen Kanalsystembauteils auf gegenüberliegenden Seiten jeweils ein Erdanker (1) mit Ankergurtband (2) im Erdboden (18) installiert wird, ein Ballastierelement (22) mit mindestens einer Ausnehmung (26, 28, 30) an dessen Unterseite (24), die derart ausgebildet ist, dass das Ballastierelement (22) auf das mindestens eine Kanalsystembauteil aufsetzbar ist, auf das mindestens eine Kanalsystembauteil gesetzt wird und jedes der Ankergurtbänder (2) an dem Ballastierelement (22) zum Direktzurren des mindestens einen Kanalsystembauteils befestigt wird.

8. Verfahren zur Erdverlegung von Kanalsystembauteilen, umfassend:
- Ausheben eines Grabens (16), insbesondere Rohrgrabens,
- Ablegen mindestens eines Kanalsystembauteils in dem ausgehobenen Graben (16),
- Fixieren des abgelegten mindestens einen Kanalsystembauteils in dem ausgehobenen Graben (16) mittels mindestens zweier Erdanker (1) an mindestens einer Stelle in Längserstreckung des mindestens einen Kanalsystembauteils und
- Füllen von Flüssigboden in den Graben (16) bis zur Oberkante (19) desselben,
wobei zum Fixieren des mindestens einen Kanalsystembauteils an mindestens einer Stelle des mindestens einen Kanalsystembauteils ein Ballastierelement (22) mit mindestens einer Ausnehmung (26, 28, 30) an dessen Unterseite (24), die derart ausgebildet ist, dass des Ballastierelement (22) auf das mindestens eine Kanalsystembauteil aufsetzbar ist, auf das mindestens eine Kanalsystembauteil gesetzt wird, auf gegenüberliegenden Seiten jeweils ein Erdanker (1) mit Ankergurtband (2) im Erdboden (18) installiert wird und jedes der Ankergurtbänder (2) an dem Ballastierelement (22) zum Direktzurren des mindestens Kanalsystembauteils befestigt wird.

9. Verfahren nach Anspruch 7 oder 8, wobei die mindestens eine Ausnehmung (26, 28, 30) an der Unterseite (24) im Oberen Bereich einen Abschnitt (26a, 28a, 30a) aufweist, der im Wesentlichen teilkreisförmig ist, vorzugsweise an dem sich vertikal oder schräg nach außen verlaufende Flächen (26b, 28b, 30b) anschließen.

10. Verfahren nach einem der vorangehenden Ansprüche 7 bis 9, wobei das mindestens eine Ballastierelement (22) mindestens eine weitere Ausnehmung (34, 36) an seiner Oberseite (32) aufweist, die derart ausgebildet ist, dass darin ein Rohr aufnehmbar beziehungsweise anordbar ist.

11. Verfahren nach Anspruch 10, wobei die mindestens eine weitere Ausnehmung (34, 36) an der Oberseite (32) des mindestens einen Ballastierelements (22) im unteren Bereich einen Abschnitt aufweist, der im Wesentlichen teilkreisförmig ist, vorzugsweise an dem sich vertikal oder schräg nach außen laufende Flächen (34b, 36b) anschließen.

12. Verfahren nach einer der Ansprüche 7 bis 11, wobei das Kanalsystembauteil ein Bauwerk (20), insbesondere Schachtbauwerk, insbesondere aus Beton, Stahlbeton, Faserbeton, Textilbeton, Beton mit alternativen Bindemitteln, z. B. alkalisch aktivierten Bindemitteln oder Polymeren, aus keramischen Baustoffen, z. B. Steinzeug, oder aus einem Polymer ist.

13. Verfahren nach einem der Ansprüche 1 bis 12, wobei das Ballastierelement (22) aus Beton, Stahlbeton, Faserbeton, Textilbeton, Beton mit alternativen Bindemitteln, z.B. alkalisch aktivierten Bindemitteln oder Polymeren, aus Holz, metallischen Werkstoffen oder einem Polymer besteht oder diese umfasst.

14. Verfahren nach einem der vorangehenden Ansprüche, ferner umfassend:
- seitliches Abschotten eines das Kanalsystembauteil enthaltenden Abschnitts des Grabens (16) vor dem Einfüllen von Flüssigboden (21).

15. Verfahren nach Anspruch 14, wobei zum Abschotten ein Abschottelement (42) mit mindestens einer Ausnehmung an dessen Unterseite (56), die derart ausgebildet ist, dass das Abschottelement (42) auf das mindestens eine Kanalsystembauteil, vorzugsweise formschlüssig, aufsetzbar ist, auf das mindestens eine Kanalsystembauteil gesetzt wird, vorzugsweise wobei das Abschottelement (42) mittels mindestens zweier Erdanker (1) mit Ankergurtband (2) in dem Graben fixiert wird.

16. Verfahren nach Anspruch 15, wobei das Abschottelement (42) mindestens zweiteilig gestaltet ist und die Teile (42a, 42b) des Abschottelements (42) gleichzeitig oder nacheinander auf das mindestens eine Kanalsystembauteil gesetzt werden.

17. Verfahren nach Anspruch 15 oder 16, wobei das Abschottelement (42) aus Beton, Stahlbeton, Faserbeton, Textilbeton, Beton mit alternativen Bindemitteln, z.B. alkalisch aktivierten Bindemitteln oderPolymeren, aus Holz, metallischen Werkstoffen oder einem Polymer besteht oder diese umfasst.

18. Verfahren nach einem der vorangehenden Ansprüche, wobei der Flüssigboden (21) unter Verwendung von zumindest einem Teil des beim Ausheben des Grabens (16) anfallenden Aushubmaterials vor Ort oder in einer baustellennahen Aufbereitungsanlage hergestellt wird.

19. Verfahren nach einem der vorangehenden Ansprüche, wobei der Graben (16) mindestens eine senkrechte Seitenwand aufweist.

20. Verfahren nach einem der Ansprüche 1 bis 18, wobei der Graben (16) mindestens eine schräge Seitenwand aufweist.

## Claims

1. Method for laying sewer-system components underground, comprising:
- digging a trench (16), in particular a pipe trench,
- setting down at least one sewer-system component in the dug trench (16),
- fixing the set-down at least one sewer-system component in the dug trench (16) by means of at least two earth anchors (1) at at least one position in the longitudinal extent of the at least one sewer-system component, and
- introducing liquid soil into the trench (16) up to the top edge (19) thereof,
wherein, for fixing the at least one sewer-system component at at least one position of the at least one sewer-system component, transverse to the longitudinal extent of the at least one sewer-system component, on opposite sides, in each case at least one earth anchor (1) with an anchor strap (2) is installed in the soil (18), a ballasting element (22) having at least one recess (26, 28, 30) on its bottom side (24), which at least one recess is configured in such a way that the ballasting element (22) is mountable onto the at least one sewer-system component, is placed onto the at least one sewer-system component, and the anchor straps (2) are connected to one another above the ballasting element (22) and are tensioned by means of a tensioning device (14) for tie-down lashing of the ballasting element (22).

2. Method for laying sewer-system components underground, comprising:
- digging a trench (16), in particular a pipe trench,
- setting down at least one sewer-system component in the dug trench (16),
- fixing the set-down at least one sewer-system component in the dug trench (16) by means of at least two earth anchors (1) at at least one position in the longitudinal extent of the at least one sewer-system component, and
- introducing liquid soil into the trench (16) up to the top edge (19) thereof,
wherein, for fixing the at least one sewer-system component at at least one position of the at least one sewer-system component, a ballasting element (22) having at least one recess (26, 28, 30) on its bottom side (24), which at least one recess is configured in such a way that the ballasting element (22) is mountable onto the at least one sewer-system component, is placed onto the at least one sewer-system component, transverse to the longitudinal extent of the at least one sewer-system component, on opposite sides, in each case at least one earth anchor (1) with an anchor strap (2) is installed in the soil (18), and the anchor straps (2) are connected to one another above the ballasting element (22) and are tensioned by means of a tensioning device (14) for tie-down lashing of the ballasting element (22).

3. Method according to Claim 1 or 2, wherein the at least one recess (26, 28, 30) on the bottom side (24) has in the upper region a portion (26a, 28a, 30a) which is substantially partially circular, preferably being adjoined by vertically or obliquely outwardly extending surfaces (26b, 28b, 30b).

4. Method according to one of preceding Claims 1 to 3, wherein the at least one ballasting element (22) has at least one further recess (34, 36) on its top side (32), which at least one further recess is configured in such a way that a pipe is able to be received or arranged therein.

5. Method according to Claim 4, wherein the at least one further recess (34, 36) on the top side (32) of the at least one ballasting element (22) has in the lower region a portion (34a, 36a) which is substantially partially circular, preferably being adjoined by vertically or obliquely outwardly extending surfaces (34b, 36b).

6. Method according to one of the preceding claims, wherein the sewer-system component is a pipe (3; 5; 38; 40), a shaft (62) or a structure (20), in particular a shaft structure, in particular composed of concrete, reinforced concrete, fibre concrete, textile concrete, concrete with alternative binders, for example alkali-activated binders or polymers, of ceramic building materials, for example stoneware, or of a polymer.

7. Method for laying sewer-system components underground, comprising:
- digging a trench (16), in particular a pipe trench,
- setting down at least one sewer-system component in the dug trench (16),
- fixing the set-down at least one sewer-system component in the dug trench (16) by means of at least two earth anchors (1) at at least one position in the longitudinal extent of the at least one sewer-system component, and
- introducing liquid soil into the trench (16) up to the top edge (19) thereof,
wherein, for fixing the at least one sewer-system component at at least one position of the at least one sewer-system component, on opposite sides, in each case one earth anchor (1) with an anchor strap (2) is installed in the soil (18), a ballasting element (22) having at least one recess (26, 28, 30) on its bottom side (24), which at least one recess is configured in such a way that the ballasting element (22) is mountable onto the at least one sewer-system component, is placed onto the at least one sewer-system component, and each of the anchor straps (2) is fastened to the ballasting element (22) for direct lashing of the at least one sewer-system component.

8. Method for laying sewer-system components underground, comprising:
- digging a trench (16), in particular a pipe trench,
- setting down at least one sewer-system component in the dug trench (16),
- fixing the set-down at least one sewer-system component in the dug trench (16) by means of at least two earth anchors (1) at at least one position in the longitudinal extent of the at least one sewer-system component, and
- introducing liquid soil into the trench (16) up to the top edge (19) thereof,
wherein, for fixing the at least one sewer-system component at at least one position of the at least one sewer-system component, a ballasting element (22) having at least one recess (26, 28, 30) on its bottom side (24), which at least one recess is configured in such a way that the ballasting element (22) is mountable onto the at least one sewer-system component, is placed onto the at least one sewer-system component, on opposite sides, in each case one earth anchor (1) with an anchor strap (2) is installed in the soil (18), and each of the anchor straps (2) is fastened to the ballasting element (22) for direct lashing of the at least one sewer-system component.

9. Method according to Claim 7 or 8, wherein the at least one recess (26, 28, 30) on the bottom side (24) has in the upper region a portion (26a, 28a, 30a) which is substantially partially circular, preferably being adjoined by vertically or obliquely outwardly extending surfaces (26b, 28b, 30b).

10. Method according to one of preceding Claims 7 to 9, wherein the at least one ballasting element (22) has at least one further recess (34, 36) on its top side (32), which at least one further recess is configured in such a way that a pipe is able to be received or arranged therein.

11. Method according to Claim 10, wherein the at least one further recess (34, 36) on the top side (32) of the at least one ballasting element (22) has in the lower region a portion which is substantially partially circular, preferably being adjoined by vertically or obliquely outwardly extending surfaces (34b, 36b).

12. Method according to one of Claims 7 to 11, wherein the sewer-system component is a structure (20), in particular a shaft structure, in particular composed of concrete, reinforced concrete, fibre concrete, textile concrete, concrete with alternative binders, for example alkali-activated binders or polymers, of ceramic building materials, for example stoneware, or of a polymer.

13. Method according to one of Claims 1 to 12, wherein the ballasting element (22) consists of or comprises concrete, reinforced concrete, fibre concrete, textile concrete, concrete with alternative binders, for example alkali-activated binders or polymers, wood, metallic materials or a polymer.

14. Method according to one of the preceding claims, further comprising:
- laterally shielding a portion, containing the sewer-channel component, of the trench (16) before liquid soil (21) is introduced.

15. Method according to Claim 14, wherein, for shielding purposes, a shielding element (42) having at least one recess on its bottom side (56), which at least one recess is configured in such a way that the shielding element (42) is mountable, preferably in a form-fitting manner, onto the at least one sewer-system component, is placed onto the at least one sewer-system component, preferably wherein the shielding element (42) is fixed in the trench by means of at least two earth anchors (1) with an anchor strap (2).

16. Method according to Claim 15, wherein the shielding element (42) is of at least two-part design, and the parts (42a, 42b) of the shielding element (42) are placed onto the at least one sewer-system component simultaneously or in succession.

17. Method according to Claim 15 or 16, wherein the shielding element (42) consists of or comprises concrete, reinforced concrete, fibre concrete, textile concrete, concrete with alternative binders, for example alkali-activated binders or polymers, wood, metallic materials or a polymer.

18. Method according to one of the preceding claims, wherein the liquid soil (21) is produced on site or in a treatment plant close to the construction site using at least some of the dug-out material that accumulates during the digging of the trench (16).

19. Method according to one of the preceding claims, wherein the trench (16) has at least one vertical side wall.

20. Method according to one of Claims 1 to 18, wherein the trench (16) has at least one oblique side wall.

## Revendications

1. Procédé de pose en terre de composants de système de canaux, comprenant :
- l'excavation d'une tranchée (16), en particulier d'une tranchée tubulaire,
- la pose d'au moins un composant de système de canaux dans la tranchée excavée (16),
- la fixation de l'au moins un composant de système de canaux posé dans la tranchée excavée (16) à l'aide d'au moins deux tirants d'ancrage (1) en au moins un emplacement dans l'étendue longitudinale de l'au moins un composant de système de canaux et
- l'introduction de sol liquide dans la tranchée (16) jusqu'au bord supérieur (19) de celle-ci,
dans lequel, pour la fixation de l'au moins un composant de système de canaux en au moins un emplacement de l'au moins un composant de système de canaux transversalement à l'étendue longitudinale de l'au moins un composant de système de canaux, au moins un tirant d'ancrage (1) comportant une sangle de tirant (2) est respectivement installé dans le sol (18) sur des côtés opposés, un élément de lestage (22) comportant au moins un évidement (26, 28, 30) est placé, au niveau de son côté inférieur (24), sur l'au moins un composant de système de canaux, lequel côté est formé de telle sorte que l'élément de lestage (22) peut être placé sur l'au moins un composant de système de canaux, les sangle de tirant (2) sont reliées les unes aux autres au-dessus de l'élément de lestage (22) et sont tendues à l'aide d'un dispositif de tension (14) pour l'amarrage de l'élément de lestage (22) vers le bas.

2. Procédé de pose en terre de composants de système de canaux, comprenant :
- l'excavation d'une tranchée (16), en particulier d'une tranchée tubulaire,
- la pose d'au moins un composant de système de canaux dans la tranchée excavée (16),
- la fixation de l'au moins un composant de système de canaux posé dans la tranchée excavée (16) à l'aide d'au moins deux tirants d'ancrage (1) en au moins un emplacement dans l'étendue longitudinale de l'au moins un composant de système de canaux et
- l'introduction de sol liquide dans la tranchée (16) jusqu'au bord supérieur (19) de celle-ci,
dans lequel, pour la fixation de l'au moins un composant de système de canaux en au moins un emplacement de l'au moins un composant de système de canaux, un élément de lestage (22) comportant au moins un évidement (26, 28, 30) est placé, au niveau de son côté inférieur (24), sur l'au moins un composant de système de canaux, lequel côté est formé de telle sorte que l'élément de lestage (22) peut être placé sur l'au moins un composant de système de canaux, transversalement à l'étendue longitudinale de l'au moins un composant de système de canaux, au moins un tirant d'ancrage (1) comportant une sangle de tirant (2) est respectivement installé dans le sol (18) sur des côtés opposés, les sangle de tirant (2) sont reliées les unes aux autres au-dessus de l'élément de lestage (22) et sont tendues à l'aide d'un dispositif de tension (14) pour l'amarrage de l'élément de lestage (22) vers le bas.

3. Procédé selon la revendication 1 ou 2, dans lequel l'au moins un évidement (26, 28, 30) présente une section (26a, 28a, 30a), qui est sensiblement partiellement circulaire, au niveau du côté inférieur (24) dans la région supérieure, de préférence section au niveau de laquelle se raccordent des surfaces (26b, 28b, 30b) s'étendant verticalement ou de façon inclinée vers l'extérieur.

4. Procédé selon l'une des revendications précédentes 1 à 3, dans lequel l'au moins un élément de lestage (22) présente au moins un autre évidement (34, 36) au niveau de son côté supérieur (32), lequel évidement est formé de telle sorte qu'une conduite peut être reçue ou peut être disposée dans celui-ci.

5. Procédé selon la revendication 4, dans lequel l'au moins un autre évidement (34, 36) présente une section (34a, 36a) au niveau du côté supérieur (32) de l'au moins un élément de lestage (22) dans la région inférieure, laquelle section est sensiblement partiellement circulaire, de préférence section au niveau de laquelle se raccordent des surfaces (34b, 36b) s'étendant verticalement ou de façon inclinée vers l'extérieur.

6. Procédé selon l'une des revendications précédentes, dans lequel le composant de système de canaux est une conduite (3 ; 5 ; 38 ; 40), un puits (62) ou un ouvrage (20), en particulier un ouvrage de puits, en particulier en béton, en béton armé, en béton fibré, en béton armé aux textiles, en béton comportant d'autres liants, par exemple des liants activés de façon alcaline ou des polymères, en matériaux de construction céramiques, par exemple en grès, ou en un polymère.

7. Procédé de pose en terre de composants de système de canaux, comprenant :
- l'excavation d'une tranchée (16), en particulier d'une tranchée tubulaire,
- la pose d'au moins un composant de système de canaux dans la tranchée excavée (16),
- la fixation de l'au moins un composant de système de canaux posé dans la tranchée excavée (16) à l'aide d'au moins deux tirants d'ancrage (1) en au moins un emplacement dans l'étendue longitudinale de l'au moins un composant de système de canaux et
- l'introduction de sol liquide dans la tranchée (16) jusqu'au bord supérieur (19) de celle-ci,
dans lequel, pour la fixation de l'au moins un composant de système de canaux en au moins un emplacement de l'au moins un composant de système de canaux, un tirant d'ancrage (1) comportant une sangle de tirant (2) est respectivement installé dans le sol (18) sur des côtés opposés, un élément de lestage (22) comportant au moins un évidement (26, 28, 30) est placé, au niveau de son côté inférieur (24), sur l'au moins un composant de système de canaux, lequel côté est formé de telle sorte que l'élément de lestage (22) peut être placé sur l'au moins un composant de système de canaux, et chacune des sangles de tirant (2) est fixée à l'élément de lestage (22) pour l'amarrage direct de l'au moins un composant de système de canaux.

8. Procédé de pose en terre de composants de système de canaux, comprenant :
- l'excavation d'une tranchée (16), en particulier d'une tranchée tubulaire,
- la pose d'au moins un composant de système de canaux dans la tranchée excavée (16),
- la fixation de l'au moins un composant de système de canaux posé dans la tranchée excavée (16) à l'aide d'au moins deux tirants d'ancrage (1) en au moins un emplacement dans l'étendue longitudinale de l'au moins un composant de système de canaux et
- l'introduction de sol liquide dans la tranchée (16) jusqu'au bord supérieur (19) de celle-ci,
dans lequel, pour la fixation de l'au moins un composant de système de canaux en au moins un emplacement de l'au moins un composant de système de canaux, un élément de lestage (22) comportant au moins un évidement (26, 28, 30) est placé, au niveau de son côté inférieur (24), sur l'au moins un composant de système de canaux, lequel côté est formé de telle sorte que l'élément de lestage (22) peut être placé sur l'au moins un composant de système de canaux, un tirant d'ancrage (1) comportant une sangle de tirant (2) est respectivement installé dans le sol (18) sur des côtés opposés, et chacune des sangles de tirant (2) est fixée à l'élément de lestage (22) pour l'amarrage direct de l'au moins un composant de système de canaux.

9. Procédé selon la revendication 7 ou 8, dans lequel l'au moins un évidement (26, 28, 30) présente une section (26a, 28a, 30a), qui est sensiblement partiellement circulaire, au niveau du côté inférieur (24) dans la région supérieure, de préférence section au niveau de laquelle se raccordent des surfaces (26b, 28b, 30b) s'étendant verticalement ou de façon inclinée vers l'extérieur.

10. Procédé selon l'une des revendications précédentes 7 à 9, dans lequel l'au moins un élément de lestage (22) présente au moins un quatrième évidement (34, 36) au niveau de son côté supérieur (32), lequel évidement est formé de telle sorte qu'un tuyau peut être reçu ou peut être disposé dans celui-ci.

11. Procédé selon la revendication 10, dans lequel l'au moins un autre évidement (34, 36) présente une section au niveau du côté supérieur (32) de l'au moins un élément de lestage (22) dans la région inférieure, laquelle section est sensiblement partiellement circulaire, de préférence section au niveau de laquelle se raccordent des surfaces (34b, 36b) s'étendant verticalement ou de façon inclinée vers l'extérieur.

12. Procédé selon l'une des revendications 7 à 11, dans lequel le composant de système de canaux est un ouvrage (20), en particulier un ouvrage de puits, en particulier en béton, en béton armé, en béton fibré, en béton armé aux textiles, en béton comportant d'autres liants, par exemple des liants activés de façon alcaline ou des polymères, en matériaux de construction céramiques, par exemple en grès, ou en un polymère.

13. Procédé selon l'une des revendications 1 à 12, dans lequel l'élément de lestage (22) est constitué de béton, de béton armé, de béton fibré, de béton armé aux textiles, de béton comportant d'autres liants, par exemple des liants activés de façon alcaline ou des polymères, de bois, de matériaux métalliques ou d'un polymère ou comprend ces matériaux.

14. Procédé selon l'une des revendications précédentes, comprenant en outre :
- le cloisonnement latéral d'une section, contenant le composant de système de canaux, de la tranchée (16) avant l'introduction du sol liquide (21).

15. Procédé selon la revendication 14, dans lequel pour le cloisonnement un élément de cloisonnement (42) comportant au moins un évidement au niveau de son côté inférieur (56) est placé sur l'au moins un composant de système de canaux, lequel côté est formé de telle sorte que l'élément de cloisonnement (42) peut être placé, de préférence avec complémentarité de formes, sur l'au moins un composant de système de canaux, de préférence dans lequel l'élément de cloisonnement (42) est fixé dans la tranchée à l'aide d'au moins deux tirants d'ancrage (1) comportant une sangle de tirant (2).

16. Procédé selon la revendication 15, dans lequel l'élément de cloisonnement (42) est conçu au moins en deux parties et les parties (42a, 42b) de l'élément de cloisonnement (42) sont placées en même temps ou tour à tour sur l'au moins un composant de système de canaux.

17. Procédé selon la revendication 15 ou 16, dans lequel l'élément de cloisonnement (42) est constitué de béton, de béton armé, de béton fibré, de béton armé aux textiles, de béton comportant d'autres liants, par exemple des liants activés de façon alcaline ou des polymères, de bois, de matériaux métalliques ou d'un polymère ou comprend ces matériaux.

18. Procédé selon l'une des revendications précédentes, dans lequel le sol liquide (21) est produit sur place ou dans une installation de traitement proche du chantier en utilisant au moins une partie des matériaux d'excavation produits lors de l'excavation de la tranchée (16).

19. Procédé selon l'une des revendications précédentes, dans lequel la tranchée (16) présente au moins une paroi latérale verticale.

20. Procédé selon l'une des revendications 1 à 18, dans lequel la tranchée (16) présente au moins une paroi latérale inclinée.
